Europäisches Patentamt

European Patent Office

Office européen des brevets

(11) Publication number: **0 342 808**
**A1**

## (12) EUROPEAN PATENT APPLICATION

(21) Application number: **89304290.3**

(22) Date of filing: **28.04.89**

(51) Int. Cl.4: **C09J 3/14** , **C08F 265/06** , **C08F 283/02**

(30) Priority: **18.05.88 US 195693**

(43) Date of publication of application:
**23.11.89 Bulletin 89/47**

(84) Designated Contracting States:
**BE DE ES FR GB IT NL SE**

(71) Applicant: **MINNESOTA MINING AND MANUFACTURING COMPANY**
**3M Center, P.O. Box 33427**
**St. Paul, Minnesota 55133(US)**

(72) Inventor: **Hicks, James P. c/o Minnesota Mining and**
**Manufacturing Co. 2501 Hudson Road P.O. Box 33427**
**St. Paul Minnesota 55133-3427(US)**

(74) Representative: **Baillie, Iain Cameron et al**
**c/o Ladas & Parry Isartorplatz 5**
**D-8000 München 2(DE)**

(54) Tackified pressure-sensitive adhesive.

(57) This invention provides tackified acrylic ultraviolet-radiation polymerized pressure-sensitive adhesives having improved adhesive properties. The adhesives contain an acrylic ultraviolet-radiation photopolymerized polymer having an alkyl acrylate monomer, the alkyl groups of which have an average of 4 to 12 carbon atoms, a monoethylenically unsaturated strongly polar copolymerizable monomer, and a hydrogenated rosin ester tackifying agent. The adhesive has comparable adhesion to solvent-based tackified acrylic pressure-sensitive adhesives containing 6 to 7 times as much tackifying agent.

EP 0 342 808 A1

## TACKIFIED PRESSURE-SENSITIVE ADHESIVE

### Background of the Invention

### Field of the Invention

This invention relates to photopolymerized acrylic pressure-sensitive adhesives, and adhesive tapes, tackified with certain tackifying resins.

### Description of the Related Art

Acrylate pressure-sensitive adhesives are well known in the art. In U.S. Patent No. Re 24,906 (Ulrich), alkyl acrylate copolymers are described which are predominately alkyl esters of acrylic acid having from 4 to 14 carbon atoms, and further comprise a minor amount of a polar copolymerizable monomer such as acrylic acid. Such adhesives are widely popular as they are readily available and provide a good balance of tack, shear and peel properties at a relatively low cost.

U.S. Patent No. 4,181,752 (Martens et al) discloses a process for ultraviolet photopolymerization of alkyl acrylate esters and polar copolymerizable monomers to form the acrylate copolymer. Martens teaches that intensity and spectral distribution of the irradiation must be controlled in order to attain desirable cohesive strengths and peel resistance. The photopolymerization is preferably carried out in an inert atmosphere as oxygen tends to inhibit the reaction.

Additional patents disclose ultraviolet radiation of acrylate adhesives. U.S. Patent No. 4,364,972 (Moon) discloses the use of N-vinylpyrrolidone as the polar copolymerizable monomer in the acrylate adhesive copolymer to provide a pressure-sensitive adhesive with high adhesion to automotive paints. U.S. Patent No. 4,391,687 (Vesley) discloses the use of specific chromophore- substituted-halomethyl-s-triazines as photoactive crosslinkers for acrylate copolymers. U.S. Patent No. 4,599,265 (Esmay) discloses a readily peelable pressure-sensitive adhesive tape, the adhesive layer of which is highly crosslinked and low in polar monomer content.

The above-cited Moon patent, which concerns pressure-sensitive adhesives designed specifically to provide enhanced adhesion to automotive paints, teaches that tackifiers can be blended into the photoactive mixtures of monomers from which those pressure-sensitive adhesives are photopolymerized, but warns, at column 6, lines 3-12, that "the addition of any such material adds complexity and hence expense to an otherwise simple, straight forward, economical process, and is not preferred, except to achieve specific results". The Moon patent does not exemplify this teaching. However, the introduction of a tackifier into a photopolymerizable mixture of monomers often interferes with the photopolymerization and prevents the attainment of the desired adhesive and cohesive properties.

U.S. Patent No. 4,243,500 (Glennon) discloses a pressure-sensitive adhesive formed from a composition comprising at least one monofunctional unsaturated acrylate ester monomer, essentially saturated tackifying resin polymers, non-crystallizing elastomeric material, and an initiator responsive to ultraviolet light, or other penetrating radiation. Glennon specifies the use of UV light within a wavelength range of 1800-4000 angstroms. The intensity of the lamps to which the adhesive is exposed is much higher than that of the lamps disclosed in Martens et al.

Glennon states that the tackifying resin may be a substance or mixture of substances selected from the group consisting of esters of rosin, hydrogenated esters of rosin, modified rosin esters, esters of polymerized rosin, esters of hydrogenated rosin, hydrocarbon resin, liner homopolymers of alpha-methyl styrene, alpha-pinene terpene hydrocarbon resin, aromatic modified C-5 hydrocarbon resin, vinyltoluene alpha-methyl styrene copolymer resins, beta-pinene terpene resins, polycyclic hydrocarbon resins, and technical hydroabietyl alcohol. However, many of these essentially saturated resin polymers are unsuitable for use in the curing method of the above-cited Martens patent due to incompatibility, which results in phase separation of the tackifying resin from the monomer mixture, excessive UV absorption which retards the photochemical reaction, and high reactivity with the monomers such that photopolymerization of the monomers is impeded. The Glennon adhesive requires the use of from about 50 parts to about 250 parts of

2

tackifying resin per hundred parts acrylate ester monomer in order to obtain a satisfactory adhesion level. Such levels of tackifier increase the glass transition temperature and act as chain transfer agents during the polymerization. This results in the pressure-sensitive adhesives having lowered molecular weights and reduced cohesive strengths. Further, many tackifiers tend to migrate to the surface of the adhesive upon aging, deteriorating the adhesion.

U.S. Patent No. 4,500,683 (Hori et al) discloses a pressure-sensitive adhesive composition containing as a polymer component, an addition-polymerization polymer of an acryl based polymer having sticking properties at room temperature and one or more ethylenically unsaturated monomers capable of forming a homopolymer or copolymer having a glass transition point of at least 273° K. The addition-polymerization polymer is prepared by polymerizing one or more ethylenically unsaturated monomers in the presence of the acryl-based polymer by solution polymerization or bulk polymerization using radical polymerization catalysts, but polymerization can be initiated by energy in the form of light, etc. Miscellaneous additives such as coloring agents, fillers, anti-aging agents, and tackifiers are disclosed as possible additions.

U.S. Patent No. 4,418,120 (Kealy et al.) discloses a pressure-sensitive adhesive tape which is made by coating a sheet backing with a solution of isooctyl acrylate: acrylic acid copolymer containing a tackifying rosin ester and an antioxidant, evaporating the solvent, and crosslinking the adhesive. U.S. Patent 4,645,711, (Winslow et al.) discloses a removable pressure-sensitive adhesive tape, the adhesive layer of which is an emulsion polymerized copolymer of alkyl acrylate such as isooctyl acrylate and a small amount of emulsifier monomer and a tackifying resins selected from hydrogenated rosin esters, polyterpene, polymerized alkyl styrene, and polymerized petroleum derived monomer resins. Most of these resins are unsuitable for use in in situ photopolymerized acrylate pressure-sensitive adhesives.

U.S. Patent 3,888,247 (Stenvall) discloses a first aid bandage having an adhesive layer applied over a flexible, preferably microporous backing. The adhesive layer is an acrylate type pressure-sensitive adhesive as described in Ulrich, in a 94:6 ratio, and contains 40 percent of a highly stabilized ester resin tackifier, commercially available from Hercules Chemical Co. under the trade name Foral 85. U.S. Patent 4,335,171 (Zenk) discloses a pressure-sensitive adhesive transfer tape in which the adhesive is a laminate of two physically dissimilar laminae. The first lamina is stated to be a soft pressure-sensitive adhesive consisting essentially of an isooctyl acrylate:acrylic acid copolymer wherein the acid present is in the range of 3-12% of the copolymer. The copolymer is tackified with 50 parts of a hydrogenated rosin ester or hydrogenated rosin acid.

The current inventor has discovered that use of a certain type of tackifying resin in small amounts results in adhesion equivalent to that of solvent polymerized adhesives containing 6 to 7 times as much tackifying resin.

## Summary of the Invention

This invention provides tackified acrylic ultraviolet-radiation photopolymerized pressure-sensitive adhesives having improved adhesion to plastic surfaces. The adhesives of the invention have comparable adhesion to solvent-based tackified acrylic pressure-sensitive adhesives containing 6 to 7 times as much tackifying agent. The adhesives comprise

a) from about 85 parts to about 98 parts of an acrylic ultraviolet-radiation polymerized polymer of monomers containing:

(i) from about 93 to about 99 parts of an alkyl acrylate monomer, the alkyl groups of which have an average of 4 to 12 carbon atoms, and

(ii) correspondingly, from about 7 parts to about 1 part of a monoethylenically unsaturated strongly polar copolymerizable monomer,

b) correspondingly, from about 15 parts to about 2 parts of a hydrogenated rosin ester tackifying agent, and

c) from about 0.01 part to about 1 part of a photoinitiator, based on the weight of the acrylic ultraviolet-radiation photopolymerized polymer and the tackifying resin.

As used in this application, the terms "tackifier" "tackifying resin", and "tackifying agent" are all synonymous, and refer only to the hydrogenated rosin esters useful in the present invention, unless otherwise specifically stated.

All percentages, parts, and ratios herein are by weight unless otherwise specifically stated.

3

Detailed Description of the Invention

The tackified acrylic ultraviolet-radiation photopolymerized pressure-sensitive adhesive (tackified pressure-sensitive adhesive) compositions of the present invention contain from about 2 parts to about 15 parts, preferably from about 5 parts to about 12 parts, of a tackifying agent selected from the group consisting of hydrogenated rosin esters. Rosin esters have a higher softening point than unmodified rosins, and higher molecular weight. Ethylene glycol, glycerol, and pentaerythritol are the most common alcohols used for esterification. Rosin esters are quite stable, and resistant to hydrolysis, and such stability increases with hydrogenation. Surprisingly, acrylic ultraviolet-radiation photopolymerized pressure-sensitive adhesives tackified with small amounts of hydrogenated rosin ester tackifying agents have comparable adhesion to solvent polymerized acrylic pressure-sensitive adhesives containing 6 to 7 times as much rosin ester tackifier. Such tackified adhesives have better adhesion to plastics than do ultraviolet-polymerized acrylic adhesives containing no such tackifier.

Preferred tackifying agents are highly hydrogenated. Such tackifiers, e.g., hydrogenated glycerine esters are commercially available from companies such as Hercules Inc., under the trade names Foral Pentalyn and Staybelite, particularly, ForalTM 65, ForalTM 85, ForalTM AX, ForalTM 105, and StaybelliteTM Ester 10.

The acrylic ultraviolet-radiation photopolymerized polymers (acrylic copolymer(s)) constitute from about 85 to about 98 parts of the pressure-sensitive adhesive compositions of the invention. Acrylic copolymers useful in adhesives of the present invention are copolymers containing at least one alkyl acrylate monomer, preferably a monofunctional unsaturated acrylate ester of non-tertiary alkyl alcohol, the molecules of which have from 4 to about 14 carbon atoms. Included within this class of monomers are, for example, isooctyl acrylate, isononyl acrylate, 2-ethyl-hexyl acrylate, decyl acrylate, dodecyl acrylate, n-butyl acrylate, and hexyl acrylate. Preferred monomers include isooctyl acrylate, isononyl acrylate, and butyl acrylate. The alkyl acrylate monomers are copolymerized with strongly polar monomers to form the photopolymerized copolymers. The alkyl acrylate monomer generally comprises from about 90 parts to about 98 parts of the acrylic copolymer in pressure-sensitive adhesives of the invention.

Polarity, or hydrogen-bonding ability, is frequently described by the use of terms such as "poorly", "moderately", and "strongly". References explaining the use of these and other solubility terms include "Solvents", Paint Testing Manual, 3rd Ed., Seward, G.G., Editor, American Society for Testing and Materials, Phila.,Pa., 1972, and "A Three-Dimensional Approach to Solubility", Journal of Paint Technology, 38, No. 496, pp. 269-280.

The strongly polar copolymerizable monomers useful in the acrylic copolymers of the invention may be acrylic acid, itaconic acid, hydroxyalkyl acrylates, cyanoalkyl acrylates, acrylamides or substituted acrylamides. While photopolymerized acrylic copolymers using moderately polar monomers such as N-vinyl pyrrolidone, acrylonitrile, vinyl chloride or diallyl phthalate are also known as adhesives, these copolymers do not show the improved tack when tackified with low levels of hydrogenated rosin ester tackifying agent as do the strongly polar monomers. The strongly polar copolymerizable monomer comprises up to about 7 parts, more preferably up to about 5 parts of the photopolymerizable polymer. Conventional pressure-sensitive adhesives containing strongly polar monomers in the low levels present in adhesives of the invention, i.e., less than about 9-10 parts per hundred parts resin (phr) typically do not have good adhesion as do adhesives of the present invention.

The mixture of the photopolymerizable monomers and the tackifier also contains a photoinitiator to induce polymerization of the monomers. Photoinitiators which are useful include the benzoin ethers such as benzoin methyl ether or benzoin isopropyl ether, substituted benzoin ethers such as anisole methyl ether, substituted acetophenones such as 2,2-diethyoxyacetophenone and 2,2-dimethoxy-2-phenyl acetophenone, substituted alpha-ketols such as 2-methyl-2-hydroxy propiophenone, aromatic sulfonyl chlorides such as 2-naphthalene sulfonyl chloride, and photoactive oximes such as 1-phenyl-1,1-propanedione-2-(0-ethoxycarbonyl)-oxime. The photoinitiator is present in an amount of about 0.01 part to about 1 part by weight.

Where superior cohesive strengths are desired, the pressure-sensitive adhesive matrix of the novel tape should be cross-linked. Preferred crosslinking agents for an acrylic pressure-sensitive adhesive are multiacrylates such as 1,6-hexanediol diacrylate as well as those disclosed in U.S. Patent No. 4,379,201 (Heilmann et al.). Crosslinking is especially easy to control when photopolymerizing the monomer in admixture with a multiacrylate crosslinking agent. Other types of crosslinking agents are also useful, e.g., any of the triazine crosslinking agents taught in U.S. Patents 4,330,590 (Vesley), and 4,329,384 (Vesley et al.). Each of the crosslinking agents is useful in the range of from about 0.01 to about 1 phr.

The instant invention also encompasses tapes containing at least one tackified acrylic ultraviolet-

4

radiation photopolymerized pressure-sensitive adhesive layer. Tapes of the invention may comprise more than one pressure-sensitive adhesive layer. In such tapes, the pressure-sensitive adhesive layers may comprise similar or different adhesives, in like or unlike thicknesses, having similar or different additives.

Where a foam-like pressure-sensitive adhesive tape is desirable, i.e., in those applications requiring adhesion to low energy substrates such as polyethylene and polypropylene, and certain high solids automotive paint systems, a monomer blend comprising microbubbles may be used as a backing or core layer. The microbubbles may be glass, or they may be polymeric. The microbubbles should have an average diameter of 10 to 200 micrometers, and comprise from about 5 to about 65 volume percent of the pressure-sensitive adhesion layer. The thickness of the foam-like layer is preferable at leasts six times that of each microbubble-free layer. When glass microbubbles are used, the thickness of the layer should exceed three times the average diameter of the microbubbles and twice the diameter of substantially every microbubble. When polymeric microbubbles are used, the thickness of the layer should be such that all of the microbubbles are substantially completely surrounded by the polymer matrix. The thickness of foam-like layers in preferred tapes of the invention range from 0.3 mm to about 4.0 mm in thickness.

When a microbubble-free pressure-sensitive adhesive tape is desired to be provided on a substantially non-tacky flexible support film, the film layer can comprise substantially the same monomers described for the tackified acrylic ultraviolet-radiation photopolymerized pressure-sensitive adhesive layer, (e.g., an alkyl acrylate monomer and a strongly polar copolymerizable monomer) with different ratios of the acrylic acid ester of non-tertiary alcohol and at least one polar copolymerizable monomer. Alternatively, the polar monomer may also be selected from moderately polar monomers, such as N-vinyl pyrrolidone, N-vinyl caprolactam, acrylonitrile, vinyl chloride or diallyl phthalate. The preferred range of the polar monomer in such a layer ranges from 20% to about 60% of the total monomer mix. Such layer may also comprise a crosslinking agent and other photopolymerizable ingredients including, but not limited to alkyl vinyl ethers, vinylidene chloride, styrene, and vinyl toluene, only in amounts that do not detract from the desired properties.

Other materials which can be blended with the polymerizable monomer mixture include plasticizers, reinforcing agents, dyes, pigments, fibers and fire retardants.

An especially useful filler material is hydrophobic silica as disclosed in U.S. Patent No. 4,710,536, (Klingen, et al.). In one preferred embodiment of the present invention, the pressure-sensitive adhesive layer further comprises from about 2 to about 15 phr of a hydrophobic silica having a surface area of at least 10 $m^2/g$.

The photopolymerizable compositions used in tapes of the invention are preferably prepared by premixing together the photopolymerizable monomers and photoinitiator, and for the tackified pressure-sensitive compositions, the tackifier. This premix is then partially polymerized to a viscosity in the range of from about 500 cps to about 5,000 cps to achieve a coatable syrup. Alternatively, the monomers can be mixed with a thixotropic agent such as fumed silica to achieve a coatable syrup composition.

This composition is coated onto a flexible carrier web and polymerized in an inert, i.e., oxygen-free, atmosphere, e.g., a nitrogen atmosphere. A sufficiently inert atmosphere can be achieved by covering a layer of the photoactive coating with a plastic film that is substantially transparent to ultraviolet radiation, and irradiating through that film in air using fluorescent-type ultraviolet lamps which generally have an intensity of about 0.4 watts/cm. If, instead of covering the polymerizable coating, the photopolymerization is to be carried out in an inert atmosphere, the permissible oxygen content of the inert atmosphere can be increased by mixing into the polymerizable monomer an oxidizable tin compound as taught in U.S. Patent No. 4,303,485 (Levens), which also teaches that such procedures will allow thick coatings to be polymerized in air.

The pressure-sensitive adhesive compositions may be coated onto a backing or substrate prior to polymerization. This may be accomplished using any conventional means such as roller coating, dip coating or extrusion coating.

As used herein, the term "tape" includes but is not limited to, those adhesive strips which are single-coated adhesive layers permanently attached to a backing or support, double-coated adhesive strips having flexible supports with an adhesive layer on both sides thereof, and adhesive strips with no support or backing, such being typically releasably attached to a low-adhesion liner, and commonly called "transfer tapes".

The following tests may be used to evaluate tapes of the invention.

## Static Shear

5

EP 0 342 808 A1

Two flat, rigid stainless steel plates are bonded together by a piece of an adhesive layer 1.27 cm x 2.5 cm. Before testing, a 1000-g weight rests over the bonded area for 15 minutes. Then the bonded plates are placed in an air-circulating oven which has been preheated to 70° C, and after 15 minutes, a 500-g weight is hung from one of the plates while the other plate is held in a position tilted 2° from the vertical to insure against any peel forces. The time at which the weight falls is the "Static Shear Value at 70° C". If no failure occurs, the test is discontinued at 10,000 minutes. Only cohesive failures are reported.

Peel Adhesion Test

Peel adhesion tests were based on the method described in ASTM D903-49, "Peel or Stripping Strength of Adhesive Bonds."

180° Peel

The adhesive layer to be tested is transferred onto 50 μm thick, chemically primed, aluminum foil, which then is slit to a width of 1.27 cm (1/2 inch). The resulting tape is self-adhered to a smooth stainless steel plate under the weight of a 2.04 kg hard-rubber-covered steel roller, 2 passes in each direction. After dwelling at 23° C for one hour, "180° Peel" is measured by moving the free end of the tape away from the steel plate at a rate of about 0.5 cm per second using a tensile tester. All peel values are reported in Newtons per decimeter (N/dm.) unless otherwise noted.

90° Peel

The adhesive layer to be tested is transferred onto a 0.05-mm thick soft aluminum foil which then is slit to a width of 1.27 cm (1/2 inch). The resulting tape is self-adhered to a smooth stainless steel plate under the weight of a 5.5-kg hard-rubber-covered steel roller, one pass in each direction. After dwelling at 23° C for 20 minutes, the "90° Peel" is measured by moving the free end of the tape away from the steel plate at 90° and at a rate of about 0.5 cm per second using a tensile tester.

Examples

Example 1 and Comparative Example C1

A premix was prepared using 93.5 parts isooctyl acrylate, 6.5 parts acrylic acid and 0.04 parts Irgacure 651. This was partially polymerized by exposure to ultraviolet radiation to provide a coatable syrup having a viscosity of about 3.0 Pascal seconds(3,000 cps). A blend of 100 parts of the partially polymerized premix, 10 parts of Foral 85 tackifying resin, 0.20 part of XL-353 (a triazine crosslinker), and an additional 0.20 part Irgacure 651 was coated onto a polyethylene-coated paper to a uniform thickness of about 0.127 mm. Comparative Example 1 was prepared without tackifying resin. The surfaces of the polyethylene coated paper contacting the adhesive composition had low-adhesion release coatings on them.

These composites were exposed to ultraviolet radiation to promote polymerization of the syrup. The comparative peel adhesion is set forth in Table 1.

Table 1

| 90° Peel Adhesion (N/dm.) | | |
|---|---|---|
| Example | ABS Plastic | Polyethylene |
| 1 | 70 | 55 |
| C1 | 55 | 22 |

## Examples 2-3 and Comparative Examples C2-C3

A blend of 100 parts of the partially polymerized premix described in Example 1, 10 parts of tackifying resin Foral 85, 0.15 part of XL--330 (triazine crosslinker), and an additional 0.35 part of Irgacure 651 was coated onto a release coated polyethylene coated paper to a uniform thickness. Example 2 was coated to a thickness of about 0.051 mm. Example 3 was coated to a thickness of about 0.127 mm. These composites were exposed to ultraviolet radiation to promote polymerization of the syrup.

Comparative Examples C2 and C3 ar two different thicknesses of a solvent based acrylic adhesive containing Foral 85 resin. A mixture of 95.5 parts isooctyl acrylate and 4.5 parts of acrylic acid were polymerized using a free radical catalyst. A blend of 100 parts of polymerized adhesive in solvent is mixed with about 67 parts of Foral 85 resin. Example C2 is coated to a thickness of about 0.051 mm. Example C3 is coated to a thickness of about 0.127 mm. Comparative peel adhesion is listed in Table 2.

Table 2

| 90° Peel Adhesion (N/dm.) | | |
|---|---|---|
| Example | Stainless Steel | Polycarbonate Plastic |
| 2 | 79 | 88 |
| 3 | 118 | 113 |
| C2 | 70 | 88 |
| C3 | 125 | 113 |

## Examples 4-15

These examples were made in substantially the same way as Example 1, but with different amounts of Foral 85, photoinitiator and photocrosslinker at 2 mils and 5 mils thick. These are shown in Table 3. These samples were also tested accordingly and the results are listed in Table 4.

7

Table 3

| Ex. | Foral 85 | Irgacure 184 | XL-330 | Thickness |
|-----|-----|-----|-----|-----|
| 4 | 5 | .25 | .05 | 40 mm |
| 5 | 5 | .35 | .05 | 40 mm |
| 6 | 5 | .25 | .15 | 40 mm |
| 7 | 5 | .35 | .15 | 40 mm |
| 8 | 10 | .30 | .10 | 40 mm |
| 9 | 10 | .30 | .10 | 40 mm |
| 10 | 15 | .25 | .05 | 40 mm |
| 11 | 15 | .35 | .05 | 40 mm |
| 12 | 15 | .25 | .15 | 40 mm |
| 13 | 15 | .35 | .15 | 40 mm |
| 14 | 5 | .25 | .05 | 100 mm |
| 15 | 15 | .25 | .05 | 100 mm |

Table 4

| 180° Peel Adhesion (24 Hr. Dwell at R.T., N/dm.) | | | |
|-----|-----|-----|-----|
| Ex. | Stainless Steel | Polypropylene | Polycarbonate | Shear at Room Temp. 1000 g (mins) |
| 4 | 67 | 41 | 55 | 130 |
| 5 | 60 | 37 | 61 | 80 |
| 6 | 41 | 30 | 53 | 3700 |
| 7 | 42 | 34 | 51 | 2700 |
| 8 | 63 | 42 | 60 | 110 |
| 9 | 62 | 47 | 60 | 94 |
| 10 | 60 | 78 | 51 | 6 |
| 11 | 85 | 85 | 85 | 8 |
| 12 | 73 | 47 | 68 | 68 |
| 13 | 83 | 54 | 74 | 54 |
| 14 | 60 | 55 | 72 | 70 |
| 15 | 66 | 74 | 74 | 4 |

Examples 16-17

A premix was prepared using 95 parts isononyl acrylate, 5 parts acrylic acid, and 0.30 part Irgacure™ 184. This was partially polymerized by exposure to ultraviolet radiation to provide a coatable syrup. A blend of 100 parts of this partially polymerized premix, 10 parts Foral 85 resin, and 0.09 part Irgacure™ 184 was coated onto a polyethylene coated paper to a uniform thickness of about 0.05 mm as Example 16. Example 17 was prepared without tackifying resin. The surfaces of the polyethylene coated paper contacting the adhesive composition has low release coating the adhesive.

These composites were exposed to ultraviolet radiation to promote polymerization of the syrup. Comparative peel adhesion is listed in Table 5.

Table 5

| 180° Peel Adhesion (N/dm.) | | |
|---|---|---|
| Example | Polypropylene | ABS Plastic |
| 16 | 94 | 94 |
| 17 | 44 | 48 |

Examples 18-19

A premix was prepared using 90 parts butyl acrylate, 10 parts acrylic acid and 0.25 part Irgacure 184. This was partially polymerized by exposure to ultraviolet radiation to provide a coatable syrup. A blend of 100 parts of this partially polymerized premix, 10 parts Foral 85 resin and 0.09 part Irgacure™ 184 was coated onto a polyethylene coated paper to a uniform thickness of about 0.051 mm as Example 18. Example 19 was prepared without tackifying resin. The surfaces of the polyethylene coated paper contacting the adhesive composition has low release coatings on them.

These composites were exposed to ultraviolet radiation to promote polymerization of the syrup. Comparative peel adhesion is listed in Table 6.

Table 6

| 180° Peel Adhesion - 24 Hour Dwell (N/dm.) | | |
|---|---|---|
| Example | Polypropylene | ABS Plastic |
| 18 | 57 | 83 |
| 19 | 20 | 70 |

Examples 20-23

These were made similar to Example 1 except with different amounts of Foral 85 and photocrosslinker. These differences are shown in Table 7 and test results are shown in Table 8.

Table 7

| Example | Foral 85 | XL-330 |
|---|---|---|
| 20 | 7 | 0.01 |
| 21 | 7 | 0.09 |
| 22 | 13 | 0.01 |
| 23 | 13 | 0.09 |

Table 8

| 180° Peel Adhesion (3 Day Dwell, Room Temp., N/dm.) | | | | |
|---|---|---|---|---|
| Example | Polypropylene | ABS | Polyethylene | Al |
| 20 | 103 | 161 | 91 | 218 |
| 21 | 87 | 145 | 76 | 198 |
| 22 | 85 | 176 | 83 | 167 |
| 23 | 100 | 176 | 87 | 169 |

Examples 24-27 and Comparative Examples C24-C27

These were made similar to Example 1 and Comparative Example 1 except with differing ratios of isooctyl acrylate and acrylic acid. Example 27 was made using Foral 105, a pentaerithritol ester. These differences are shown in Table 9 and test results are shown in Table 10.

Table 9

| Example | Acrylic Acid | Isooctyl Acrylate | Foral 85 | Foral 105 |
|---|---|---|---|---|
| 24 | 1 | 99 | 10 | -- |
| C24 | 1 | 99 | -- | -- |
| 25 | 2 | 98 | 10 | -- |
| C25 | 2 | 98 | -- | -- |
| 26 | 3 | 97 | 10 | -- |
| C26 | 3 | 97 | -- | -- |
| 27 | 6.5 | 93.5 | -- | 10 |
| C27 | 6.5 | 93.5 | -- | -- |

Table 10

| 180° Peel Adhesion (24 Hour Dwell, Room Temp., N/dm.) | | |
|---|---|---|
| Example | Polypropylene | ABS Plastic |
| 24 | 47 | 61* |
| C24 | 9 | 30 |
| 25 | 42 | 56* |
| C25 | 12 | 34 |
| 26 | 45 | 79* |
| C26 | 13 | 30 |
| 27 | 43 | 77 |
| C27 | 19 | 53 |

* adhesive splits during test, indicating that adhesion to the substrate was so strong that the internal cohesion of the tape failed prior to failure of the adhesive bond.

As can be clearly seen from the above data, adhesives of the invention provide improved peel adhesion over otherwise identical low acrylic acid formulations containing no tackifier resin.

## Claims

1. A tackified acrylic ultraviolet-radiation polymerized pressure-sensitive adhesive comprising

a) from about 85 parts to about 98 parts of an acrylic ultraviolet-radiation photopolymerized polymer of monomers containing:

(i) from about 93 to about 99 parts of an alkyl acrylate monomer, the alkyl groups of which have an average of 4 to 12 carbon atoms, and

(ii) correspondingly, from about 7 parts to about 1 part of a monoethylenically unsaturated polar copolymerizable monomer,

b) correspondingly, from about 15 parts to about 2 parts of a hydrogenated rosin ester tackifying agent, and

c) from about 0.01 part to about 1 part of a photoinitiator, based on the weight of the ultraviolet radiation polymerized polymer and the tackifying resin.

2. A tackified acrylic ultraviolet-radiation polymerized pressure-sensitive adhesive according to claim 1 wherein said tackifying agent comprises from about 5 to about 12 parts.

3. A tackified acrylic ultraviolet-radiation polymerized pressure-sensitive adhesive according to claim 1 wherein said tackifying agent is selected from the groups consisting of hydrogenated glycerine rosin esters, hydrogenated pentaerthritol esters, and glycol esters.

4. A tackified acrylic ultraviolet-radiation polymerized pressure-sensitive adhesive composition according to claim 1 wherein said acrylic ultraviolet-radiation polymerized polymer comprises

a) from about 93 parts to about 99 parts of an alkyl acrylate ester selected from the group consisting of isooctyl acrylate, isononyl acrylate, decyl acrylate, dodecyl acrylate, butyl acrylate, ethyl-hexyl acrylate and hexyl acrylate,

b) correspondingly from about 7 parts to about 1 part of a monoethylenically unsaturated strongly polar copolymerizable monomer selected from the group consisting of acrylic acid, itaconic acid, hydroxyalkyl acrylates, cyanoalkyl acrylates, acrylamides or substituted acrylamides.

5. A tackified acrylic ultraviolet-radiation polymerized pressure-sensitive adhesive according to claim 4 wherein said acrylic ultraviolet-radiation polymerized polymer comprises

a) from about 93 parts to about 99 parts isooctyl acrylate, and

b) correspondingly, from about 7 parts to about 1 part acrylic acid.

6. A tackified acrylic ultraviolet-radiation polymerized pressure-sensitive adhesive according to claim 1 wherein said acrylic ultraviolet-radiation polymerized polymer comprises

a) from about 95 to about 99 parts isooctyl acrylate, and

b) correspondingly from about 5 parts to about 1 part acrylic acid.

7. A tackified acrylic ultraviolet-radiation polymerized pressure-sensitive adhesive according to claim 1 further comprising from about 0.1 to about 1 part crosslinking agent.

8. A tackified acrylic ultraviolet-radiation polymerized pressure-sensitive adhesive according to claim 7 wherein said crosslinking agent is selected from the group consisting of triazines and multiacrylates.

9. A tackified acrylic ultraviolet-radiation polymerized pressure-sensitive adhesive according to claim 1 wherein said adhesive further comprises microspheres.

10. A pressure-sensitive adhesive tape comprising said tackified acrylic ultraviolet-radiation polymerized pressure-sensitive adhesive of claim 1 having at least one surface adhered to a flexible carrier web.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 194 706 (BANDO CHEMICAL INDUSTRIES LTD) * Claims 6,10 * | 1 | C 09 J 3/14 C 08 F 265/06 C 08 F 283/02 |

TECHNICAL FIELDS
SEARCHED (Int. Cl.4)

C 08 F
C 09 J
C 08 L

The present search report has been drawn up for all claims

| Place of search | Date of completion of the search | Examiner |
|---|---|---|
| THE HAGUE | 23-08-1989 | SCHUELER D.H.H. |